# EUROPÄISCHE PATENTANMELDUNG

(11) **EP 2 687 835 A2**
(43) Veröffentlichungstag der Anmeldung: **22.01.2014**
(21) Anmeldenummer: 13003631.2
(22) Anmeldetag: 18.07.2013
(51) Int. Cl.: G01N 1/08, G01N 1/14, G01N 1/12

(54) **Probennahmevorrichtung und Verfahren zur Entnahme einer Sammelprobe**

(30) Priorität: 19.07.2012 DE 102012015429
(71) Anmelder: Destill Tech GmbH, 77704 Oberkirch (DE)
(72) Erfinder: Schmiederer, Berthold, 77794 Lautenbach (DE)
(74) Vertreter: Thämer, Wolfgang

(57) **Zusammenfassung**

Probennahmevorrichtung für mit Trauben oder anderen versaftbaren Früchten befüllte Behälter. Dazu weist die Vorrichtung mindestens zwei Probensonden mit jeweils mindestens einer Saugleitung auf. Die Saugleitungen münden in ein mit Unterdruck beaufschlagbares Probensammelgefäß. Am Probensammelgefäß ist ein Refraktometer angeschlossen, dessen Sensor mit dem Inhalt des Probensammelgefäßes in Kontakt kommt. Oberhalb des Sensors des Refraktometers ist am Probensammelgefäß ein Füllstandsschalter angeordnet, dessen Sensor oberhalb des Sensors des Refraktometers liegt. Somit wird eine Probennahmevorrichtung entwickelt, mit der aus einem mit Trauben oder anderen versaftbaren Früchten befüllten Behälter an mehreren Stellen gleichzeitig oder innerhalb einer kurzen Zeitspanne Saftproben entnommen und diese auf mindestens eine physikalische Größe hin analysiert werden können.

## Beschreibung

Die Erfindung betrifft eine Probennahmevorrichtung für mit Trauben oder anderen versaftbaren Früchten befüllte Behälter.

Beispielsweise in Kellereibetrieben werden nach der Traubenernte die gelesenen Trauben in großen Behältern, z.B. in Breisacher Bottichen oder quaderförmigen Eurocontainern angeliefert. Vor der Verarbeitung der Trauben wird aus jedem Behälter eine Traubensaftprobe entnommen um u.a. den Zuckergehalt über die Traubensaftdichte bestimmen zu können. Für diese Probennahme ist es wünschenswert, eine Probe zu erhalten die einem repräsentativen Querschnitt der Behälterfüllung entspricht.

Aus der DE 48 480 ist ein Probenentnahmegerät in Form eines Senkbehälters bekannt. Der Senkbehälter ist ein kleiner rohrförmiger Tank, der an seinem unteren Ende einen Ablasshahn aufweist. In seinem oberen Bereich besteht die Rohrwandung aus einem feinen Siebzylinder, dessen obere Stirnseite mit einem Deckel verschlossen ist. Im unteren Drittel weist der Tank eine ringförmige, verschlossene Kammer auf, die zur Gewichtsbeschwerung des Probenentnahmegeräts mit Bleischrot befüllt ist. Das Probenentnahmegerät wird im Maischebottich versenkt. Dabei hängt es an einem Draht, der am oberen Behälterrand des Maischebottichs befestigt ist. Bei diesem Gerät stammt die gezogene Probe nur aus einem Bereich des Bottichs.

Der vorliegenden Erfindung liegt die Problemstellung zugrunde, eine Probennahmevorrichtung zu entwickeln, mit der aus einem mit Trauben oder anderen versaftbaren Früchten befüllten Behälter an mehreren Stellen gleichzeitig oder innerhalb einer kurzen Zeitspanne Saftproben entnommen und diese auf mindestens eine physikalische Größe und/oder mindestens auf einen Teil der chemischen Zusammensetzung hin analysiert werden kann.

Diese Problemstellung wird mit den Merkmalen der Patentansprüche 1 und 8 gelöst. Dazu weist nach Anspruch 1 die Vorrichtung mindestens zwei Probensonden mit jeweils mindestens einer Saugleitung auf. Die Saugleitungen münden in ein mit Unterdruck beaufschlagbares Probensammelgefäß. Am Probensammelgefäß ist ein Refraktometer angeschlossen, dessen Sensor mit dem Inhalt des Probensammelgefäßes in Kontakt kommt. Oberhalb des Sensors des Refraktometers ist am Probensammelgefäß ein Füllstandsschalter angeordnet, dessen Sensor oberhalb des Sensors des Refraktometers liegt.

Nach dem Verfahrensanspruch 8 werden die Probensonden mithilfe einer Vorrichtung in den befüllten Behälter eingeschoben. Die Probensonden deformieren während der Einschiebebewegung, die mindestens 80% der Behälterfüllhöhe abdeckt, einen kleinen Teil der Trauben oder der Früchte zur Freigabe ihres Saftes. Dieser Saft wird als Probe über die Probensonden mittels Unterdruck in ein Probensammelgefäß gefördert. Mit einem im oder am Probensammelgefäß angeordneten Analysegerät wird während und/oder nach der Probennahme mindestens eine physikalische Größe und/oder mindestens ein Teil der chemischen Zusammensetzung erfasst und in elektrische Signale für eine nachgeschaltete Auswerteeinrichtung umgewandelt.

Mithilfe der erfindungsgemäßen Probennahmevorrichtung und -verfahren wird auf eine produktschonende Weise aus den einzelnen, von den Traubenanbaubetrieben angelieferten Behälterfüllungen eine Saftprobe genommen, die während des Eintauchhubes an verschiedenen Orten angesaugt wird. Dabei repräsentiert die genommene Saftprobe einen Querschnitt des kompletten Inhalts des angelieferten Behälters.

Weitere Einzelheiten der Erfindung ergeben sich aus den Unteransprüchen und der nachfolgenden Beschreibung einer schematisch dargestellten Ausführungsform.
- Figur 1:: Dimetrische Ansicht einer Probennahmevorrichtung;
- Figur 2:: Dimetrische Ansicht des offenen Gehäuses der Probennahmevorrichtung;
- Figur 3:: Längsschnitt eines Endstücks einer Probensonde;
- Figur 4:: Stirnansicht eines Endstücks einer Probensonde;
- Figur 5:: Querschnitt durch das offene Gehäuse parallel zum Wasserventil;
- Figur 6:: Querschnitt durch das offene Gehäuse parallel zum Refraktometer und dem Füllstandsschalter;
- Figur 7:: Seitenansicht der angehobenen Probennahmevorrichtung oberhalb des Traubenbehälters;
- Figur 8:: Seitenansicht der in den befüllten Traubenbehälter herabgelassenen Probennahmevorrichtung.

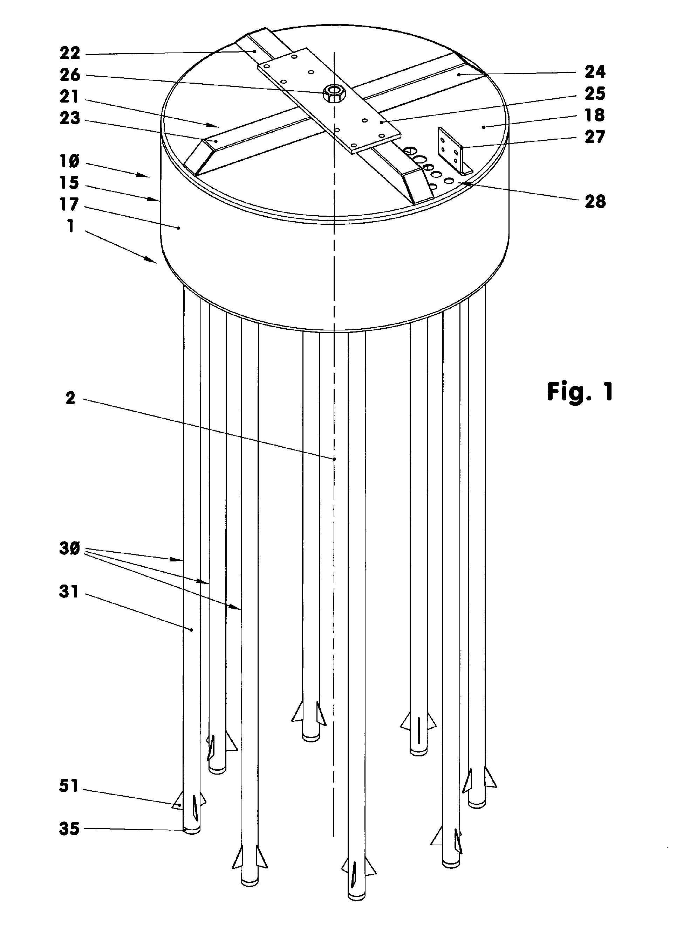

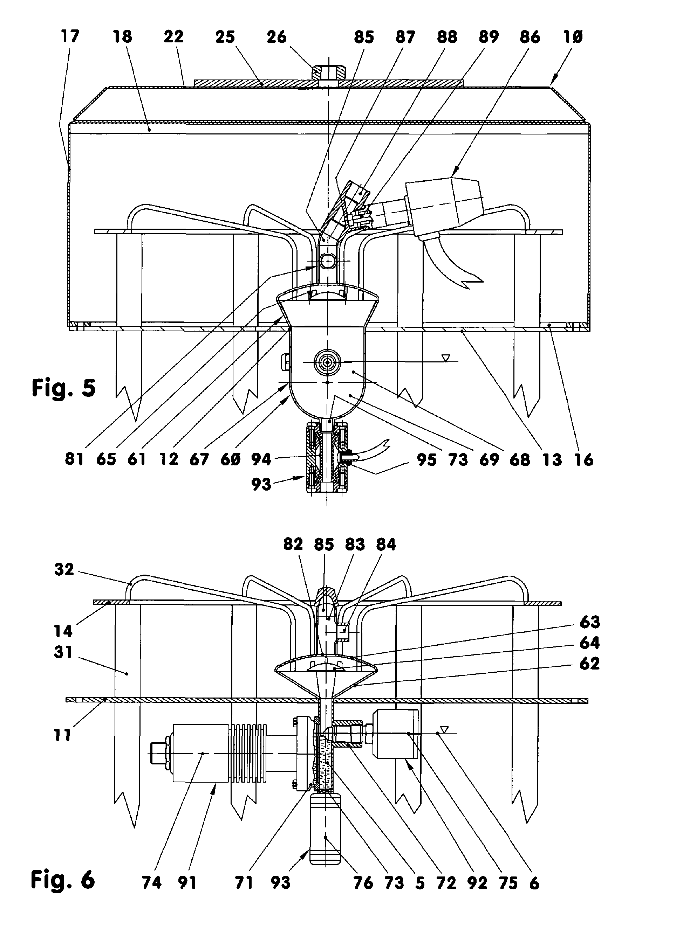

Die Figur 1 zeigt eine Probennahmevorrichtung (1). Sie besteht im Wesentlichen aus einem Trägergehäuse (10), aus dem unten acht Probensonden (30) herausragen. Im Trägergehäuse (10) befinden sich u.a. Teile der Tragkonstruktion, vgl. Figuren 5 und 6, die Luft- und Wasseranschlüsse (84, 88), ein Wasserventil (86), der obere Bereich (61) eines Probensammelgefäßes (60) und die Anschlüsse der Saugleitungen (32). Aus der Unterseite (13) der Gehäusegrundplatte (11) ragt der untere Bereich (67) des Probensammelgefäßes (60) heraus. An ihm sind beispielsweise ein Refraktometer (91), ein Füllstandsschalter (92) und ein Ablassventil (93) angeordnet.

Das Trägergehäuse (10) besteht aus der Gehäusegrundplatte (11) und einer tragfähigen Gehäusehaube (15). Die Gehäusegrundplatte (11) ist eine kreisrunde, 5 mm starke Platte, deren Außendurchmesser z.B. 580 mm beträgt. In ihrem Zentrum hat sie eine rechteckige Ausnehmung (13), in der das Probensammelgefäß (60) eingelassen und dicht befestigt ist. Um das Zentrum der Platte herum sind die acht zueinander parallelen Tragrohre (31) der Probensonden (30) eingeschweißt. Ihre Mittellinien (59) liegen mit einer 45-Winkelgradteilung auf einem zentralen Kreis mit einem Durchmesser von 480 mm.

Die Tragrohre (31) stehen nach oben z.B. 110 mm über. Über ihre oberen Enden ist ein 5 mm starker Tragring (14) so gelegt, dass die Stirnflächen der am Tragring (14) angeschweißten Tragrohrenden bündig mit der Oberseite des Tragringes (14) abschließen.

Der Tragring (14) hat beispielsweise einen Innendurchmesser von 440 mm und einen Außendurchmesser von 520 mm.

Auf der Gehäusegrundplatte (11) liegt die Gehäusehaube (15) auf. Letztere besteht aus einem Ringflansch (16), einem zylindrischen Mantel (17), einem Deckel (18) und einem Versteifungskreuz (21). An dem auf der Gehäusegrundplatte (11) aufliegenden Ringflansch (16) ist der Mantel (17) angeschweißt. Oben auf dem Mantel (17) befindet sich der ebenfalls angeschweißte Deckel (18). Auf dem runden Deckel (18) ist das Versteifungskreuz (21) befestigt.

Das Versteifungskreuz (21) umfasst ein den gesamten Deckel (18) überquerendes Vierkantrohr (22) mit einem 40 x 40 mm messenden Querschnitt. Die Rohrwandstärke beträgt 2 mm. Mittig und quer zu diesem Vierkantrohr (22) sind zwei kürzere Vierkantrohre (23, 24) angeordnet, die am Vierkantrohr (22) angeschweißt sind. Die Vierkantrohre (22, 23, 24) sind im Bereich des Deckelrandes unter einem 45-Gradwinkel abgeschrägt. Jede der abgeschrägten vier Flächen ist mit einer ebenen Platte verschlossen.

Im Zentrum des auf dem Deckel (18) durch Schweißen befestigten Versteifungskreuzes (21) ist eine Adapterplatte (25) angebracht, in deren Mitte eine M20-Mutter (26) aufgeschweißt ist. Die Mittellinie dieser Mutter (26) ist deckungsgleich mit der Vorrichtungsmittellinie (2).

Über die Adapterplatte (25) kann die Probennahmevorrichtung (1) beispielsweise an einer Hebevorrichtung adaptiert werden.

Die Gehäusehaube (15) sitzt über ihren Ringflansch (16) direkt oder über eine Dichtung auf der Gehäusegrundplatte (11) auf. Der Ringflansch (16) und die Gehäusegrundplatte (11) sind z.B. über 24 M6-Schrauben miteinander lösbar verbunden.

Nach Figur 1 befindet sich im Deckel (18) zwischen dem Vierkantrohr (22) und einem Montagewinkel (27) eine Gruppe (28) von Bohrungen, die der Durchschleusung mehrerer Kabel und Leitungen dient. Alle Kabel und Leitungen - hier nicht dargestellt - sind im Deckeldurchgangsbereich abgedichtet. Oberhalb des Deckels (18) sind sie zu einem Kabelstrang zusammengeführt. Sie verlaufen von dort ab in einer - hier nicht dargestellten - kabelführenden Hohlgliederkette, die am Montagewinkel (27) befestigt ist.

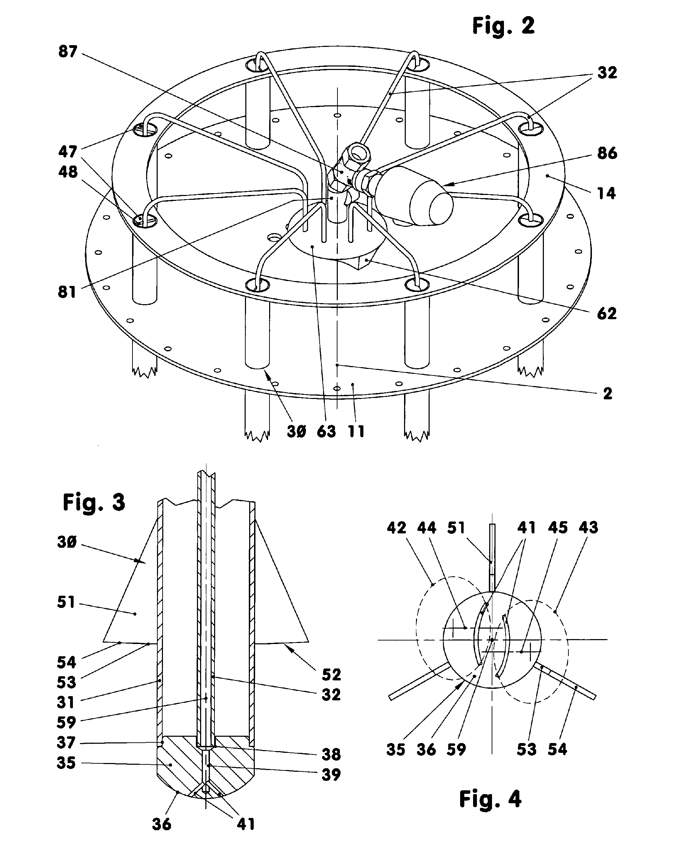

Die aus dem Trägergehäuse (10) herausragenden Probensonden (30) stehen beispielsweise 1200 mm nach unten über die Gehäusegrundplatte (11) über. Sie bestehen aus dem schon eingeführten außenliegenden Tragrohr (31) und einem innenliegenden Saugrohr (32), vgl. Figur 3. Das Tragrohr (31), dessen Außendurchmesser z.B. 28 mm misst und das eine Wandstärke von ca. 1,5 mm hat, bildet einen formsteifen Träger für das innenliegende, dünnwandige Saugrohr (32). Letzteres hat bei einem Außendurchmesser von 5 mm eine Wandstärke von einem Millimeter.

Das Tragrohr (31) weist, nach Figur 3, an seinem unteren Ende ein Endstück (35) auf, das das Tragrohr (31) nach unten dicht abschließt, das Saugrohr (32) an seinem unteren Ende dicht und fest anordnet und zudem mindestens eine Probenansaugausnehmung (41) im Bereich seiner Stirnfläche (36) und/oder an seiner radialen Außenwandung hat. Tragrohrseitig hat das Endstück (35) zur Aufnahme des Saugrohres (32) eine drei Millimeter tiefe Einsenkung (38). An die Einsenkung (38) schließt sich eine zentrale Längsbohrung (39) an, die die Probenansaugausnehmung (41) durchdringt. Der Innendurchmesser der Längsbohrung misst z.B. 2 mm.

Das Endstück (35), dessen Außendurchmesser bündig mit der Außenwandung des Tragrohres (31) abschließt, hat eine Länge von z.B. 18 mm, von denen drei Millimeter schon im Tragrohr (31) zur Zentrierung stecken. Seine untere, freie Stirnfläche (36) ist z.B. sphärisch gewölbt. Der Wölbungsradius entspricht z.B. 18 mm. Als Probenansaugausnehmungen werden im Ausführungsbeispiel z.B. ein Millimeter breite Saugschlitze (41) verwendet. Die Schlitze (41) sind gegenüber der geometrischen Mittellinie des Endstücks (35) so um 45 Winkelgrade geneigt, dass sich die z.B. 6 mm tiefen Schlitze (41) in der Längsbohrung (39) treffen bzw. schneiden. Die Mittelebenen dieser beiden Schlitze (41) schneiden die Mittellinie des Endstücks (35) ca. 5 mm unterhalb des untersten Punktes der sphärischen Stirnfläche (36). Die Sägescheiben (42, 43), mit denen diese Schlitze (41) gesägt werden, haben einen Durchmesser von z.B. 30 mm bei einer Scheibendicke von einem Millimeter.
Nach Figur 4 sind die Schlitze (41) zusätzlich gegeneinander versetzt. Die beiden Mittellinien (44, 45) der gestrichelt dargestellten Sägescheiben (42, 43) sind um z.B. 6,9 mm symmetrisch zur Mittellinie (59) der Probensonde (30) gegeneinander versetzt. Dadurch wird ohne eine Schlitzvergrößerung der Probenentnahmeradius vergrößert.

Beispielsweise 45 mm oberhalb des untersten Punktes des einzelnen Endstückes (35) sind am Tragrohr (31) z.B. drei flügelartige Quetschstege (51) angeordnet, vgl. Figur 3. Die angeschweißten, z.B. 1,5 mm starken und zumindest annähernd dreieckförmigen Quetschstege (51) spannen im Querschnitt - normal zur Mittellinie (59) - einen Kreis mit einem Durchmesser von z.B. 68 mm auf. Im Ausführungsbeispiel sind drei Quetschstege (51) je Tragrohr (31) mit einer Teilung von 120 Winkelgraden auf gleicher Höhe befestigt. Der spitze Winkel eines jeden Quetschsteges (51) ist der Gehäusegrundplatte (11) zugewandt.

Der einzelne Quetschsteg (51) hat parallel zur Mittellinie (59) eine Länge von z.B. 40 mm. Seine untere Stirnfläche (52) setzt sich aus zwei Planflächen (53, 54) zusammen, vgl. auch Figur 4. Eine innere Planfläche (53), die an das Tragrohr (31) anschließt, hat eine Länge von 5 mm. Diese Planfläche (53) ist normal zur Mittellinie (59) orientiert. Die daran anschließende äußere Planfläche (54) ist um ca. 2 Winkelgrade gegenüber der inneren Planfläche (53) nach oben abgewinkelt. Die Anordnung der beiden Planflächen (53, 54) hat den Vorteil, dass die Stiele einzelner Trauben beim Einfahren der Probensonde (30) in die Trauben (3) nach einigen Zentimetern des Mitschleppens in den Bereich der äußeren Planfläche (54) gelangen, wodurch sie durch deren Abwinkelung nach außen gedrängt werden, um so die Probensonde (30) leichter passieren zu lassen.

Auch am oberen Ende des Tragrohres (31) ist das Saugrohr (32) durch Schweißen, Hartlöten oder Kleben befestigt. Dazu ist in das jeweilige obere Ende des Tragrohres (31) die Hälfte einer zentral aufgebohrten Kreisscheibe, z.B. durch Anschweißen, befestigt, vgl. Figur 2. Dabei sind die Kreisscheibenhälften (47) so in das jeweilige Tragrohr (31) eingesetzt, dass jeweils die langen Kanten der planen Seitenfläche (48), in der auch die jeweilige Mittellinie (59) liegt, auf einer radialen Geraden liegen, die selbst die Vorrichtungsmittellinie (2) jeweils schneiden oder in einem nur wenige Millimeter großen Abstand kreuzen. Alternativ können die Kreisscheibenhälften (47) auch durch zentral aufgebohrten Kreisscheiben ersetzt werden, wodurch das Tragrohr (31) an seinem oberen Ende verschlossen wird.

Die aus den Tragrohren (31) herausragenden Saugrohre (32) führen über zumindest annähernd radiale Saugrohrabschnitte (33) zu einem Probensammelgefäß (60). Die Saugrohrabschnitte (33) haben zur Vorrichtungsmitte hin ein Gefälle, das z.B. 11,3 Winkelgrade gegenüber der Horizontalen misst. Die Übergänge zwischen den vertikalen Saugrohrabschnitten und den jeweiligen zumindest annähernd radialen Saugrohrabschnitte (33) sind durch Bögen gestaltet, die jeweils z.B. einem Radius von 20 mm aufweisen.

Der obere Bereich (61) des Probensammelgefäßes (60), der über die Gehäusegrundplatte (11) übersteht, besteht aus einem Sammeltrichter (62) und einem zumindest teilweise sphärisch nach oben gewölbten Gefäßdeckel (63). Die Deckelwölbung des Gefäßdeckels (63) hat einen mittleren Radius von z.B. 113 mm und einen Durchmesser von ca. 114 mm. In den Gefäßdeckel (63) münden die vertikalen Saugrohrabschnitte (34) der Saugrohre (32). Ihre parallelen Mittellinien liegen äquidistant verteilt auf einem Kreis mit einem Durchmesser von z.B. 80 mm. Jedes in das Probensammelgefäß (60) hineinragende Ende steht im Mittel ca. 10 mm über die Innenwandung des Gefäßdeckels (63) über.

Im Zentrum des Gefäßdeckels (63) ist ein Leitungs-T-Stück (81) befestigt, vgl. Figur 6, dessen einander gegenüberliegende T-Stückanschlüsse (82, 83) auf der Vorrichtungsmittellinie (2) liegen. Der obere T-Stückanschluss (83) gehört zur Spülwasserzufuhr, während der mittlere, seitliche T-Stückanschluss (84) der Luftzu- und -abfuhr dient. Der untere T-Stückanschluss (82) mündet direkt in den Gefäßdeckel (63). Ca. 8 mm unterhalb des unteren T-Stückanschlusses (82) ist ein Prallkörper (64) z.B. über zwei Stäbe (65) fest im Probensammelgefäß (60) angeordnet. Der Prallkörper (60) ist eine z.B. 2 mm dicke, z.B. sphärisch gewölbte Platte mit einem Außendurchmesser von z.B. 42 mm. Der Krümmungsradius der Platte beträgt z.B. 35 mm. Die konvex gekrümmte Seite des Prallkörpers (64) ist dabei dem T-Stückanschluss (82) zugewandt. Die Unterkante des Prallkörpers (64) liegt im Ausführungsbeispiel z.B. in der Ebene, in der auch die zwischen dem Gefäßdeckel (63) und dem Sammeltrichter (62) gelegene Montagefuge liegt.

Der Sammeltrichter (62) erstreckt sich in vertikaler Längsrichtung zwischen dem Gefäßdeckel (63) und dem Gefäßunterteil (67). Da der Gefäßdeckel (63) einen runden und das Gefäßunterteil (67) einen rechteckigen Querschnitt hat, ändert der Sammeltrichter (62), vgl. Figuren 5 und 6, seinen Querschnitt über den gesamten, zwischen dem Gefäßdeckel (63) und dem Gefäßunterteil (67) gelegenen Abstand. Letzterer misst z.B. 30 mm.

Das Gefäßunterteil (67) umfasst einen oberen, quaderförmigen (68) und einen unteren halbzylindrischen Abschnitt (69). Beide Abschnitte (68, 69) haben innen eine Breite von z.B. 81 mm. Der Abschnitt (68) hat innen eine Tiefe von z.B. 13 mm und eine Höhe von z.B. 62,5 mm. Der Innenradius des unteren Abschnitts (69) entspricht der halben Breite des Abschnittes (68). Das Gefäßunterteil (67) hat drei mit Flanschen (71, 72, 73) versehene Öffnungen, vgl. Figur 6. Der größte Flansch ist der Messgeräteflansch (71). Er hat z.B. einen Außendurchmesser von z.B. 84 mm und dient der Aufnahme eines Refraktometers (91). Er hat die Mittellinie (74). Ihm gegenüber ist ein rohrförmiger Schalterflansch (72) befestigt. Er hat z.B. einen Außendurchmesser von z.B. 30 mm und an seinem freien Ende ein 1/2-Zoll-Innengewinde. Seine Mittellinie (75) ist parallel zur Mittellinie (74) angeordnet und liegt z.B. 22,5 mm höher als diese. Der dritte Flansch ist ein Ventilflansch (73), der unten aus dem Probensammelgefäß (60) herausragt. Seine Mittellinie (76) ist deckungsgleich zur Vorrichtungsmittellinie (2). Dieser Flansch (73) hat ein 3/8-Zoll-Außengewinde zum Aufschrauben eines Ablassventils (93).

Das Gefäßunterteil (67) und das Ablassventil (93) haben gemeinsam eine Höhe von z.B. 183 mm. Um dieses Maß steht diese Apparatur von der Gehäusegrundplatte (11) nach unten ab.

Das Refraktometer (91) ist eine Messvorrichtung zur Bestimmung des Reifegrades der angelieferten Trauben. Zur Ermittlung des Zuckergehalts der flüssigen Beerensaftprobe (5) wird der Brechungsindex der Probenflüssigkeit bestimmt und - umgewandelt als elektrisches Signal - über eine serielle Schnittstelle zur Verfügung gestellt. Alternative Vorrichtungen zur Zuckergehaltsbestimmung sind denkbar, z.B. eine elektronische Oechsle- oder Mostwaage.

Es ist auch denkbar, mit der Messvorrichtung oder entsprechenden Abwandlungen davon auch andere Eigenschaften und/oder Qualitätsmerkmale der Beerensaftprobe (5) zu erfassen, auszugeben und weiter zu verwerten.

Der Füllstandsschalter (92) ist ein sogenannter Grenzstandsschalter für wässrige Lösungen. Mittels eines kapazitiven Sensors wird die Änderung der Dielektrizitätskonstante detektiert. Diese Änderung tritt ein, wenn der im Probensammelgefäß (60) ansteigende Flüssigkeitspegel (6) die empfindliche Stelle des Sensors übersteigt. Die Änderung der Dielektrizitätskonstanten wird in ein von der Vorrichtung verwertbares Schaltsignal umgewandelt. Bei diesem Sensor wird das Medium (5) der Probe nicht in das Füllstandsschaltergehäuse eingeleitet. Selbstverständlich können hier auch Füllstandsschalter verwendet werden, die auf anderen Messprinzipien beruhen.

Das Ablassventil (93) ist beispielsweise ein pneumatisches Quetschventil. Es lagert in seinem gasdichten Ventilgehäuse einen elastischen Schlauch (94), dessen Innenwandung mit dem durch das Ventil (93) förderbaren Medium (5) in Kontakt kommt. Zum Sperren des Ablassventils (93) wird hier z.B. über einen seitlichen Druckluftanschluss (95) Druckluft in das Ventilgehäuse gefördert, um den elastischen Schlauch (94) bis zum Schließen seines Querschnitts zusammen zu quetschen.

Im Trägergehäuse (10) befindet sich oberhalb des Probensammelgefäßes (60) ein elektrisch betätigbares Wasserventil (86), vgl. Figur 5. Dieses, gegen die Horizontale um 10 Winkelgrade nach oben geneigte Ventil ist über ein Winkelstück (85), das einen 30-Winkelgradkrümmer darstellt, am Leitungs-T-Stück (81) befestigt. Das Wasserventil (86) ist wie auch das Ablassventil (93) an einer z.B. externen Steuerung angeschlossen. Es beinhaltet in seinem Gehäuse einen elektrischen oder elektromechanischen Mechanismus, der ein Schließglied (89) zum Schließen des Wasserventils (86) auf dessen im Ventilrohr (87) angeordneten Dichtsitz presst.

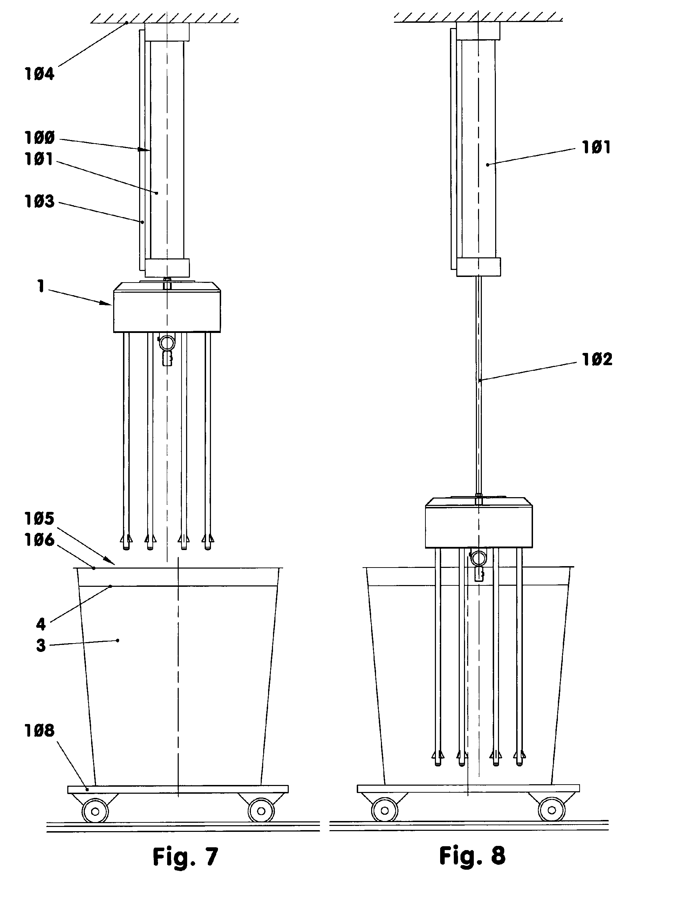

Eine Probennahme ist in den Figuren 7 und 8 dargestellt. Die frisch geernteten Trauben (3) werden z.B. in Breisacher Bottichen (105) angeliefert. Im Ausführungsbeispiel werden diese Bottiche (105) auf schienengeführten Transportwagen (108) gestellt, um so, nach Figur 7, unter die z.B. an einer Hallendecke (104) oder einer entsprechenden Tragkonstruktion aufgehängte Probennahmevorrichtung (1) geschoben zu werden. Zwischen der Hallendecke (104) und der Probennahmevorrichtung (1) ist eine Hebevorrichtung (100), z.B. ein Pneumatikzylinder (101) angeordnet, dessen Kolben einen Hub von 1,2 Metern zurücklegen kann. Am Pneumatikzylinder (101) befindet sich beispielsweise ein Wegmesssystem (103) mit dem der Kolbenweg erfasst wird. Die Probennahmevorrichtung (1) ist über die Mutter (26) des Trägergehäuses (10) mit der Kolbenstange (102) des Pneumatikzylinders (101) verschraubt.

Sobald der Bottich (105) mit den Trauben (3) unter der Probennahmevorrichtung (1) steht, wird diese langsam um z.B. 1,2 Meter abgesenkt. Die einstellbare Absenkgeschwindigkeit beträgt beispielsweise 0,05 bis 0,2 m/sec. Mit dem Beginn der Absenkung wird das Wasserventil (86) elektrisch und das Ablassventil (93) pneumatisch geschlossen und am Luftanschluss (84), vgl. Figur 6, wird ein Sollunterdruck von z.B. 0,3 x 10⁵ Pa angelegt. Der Unterdruck wird beispielsweise durch eine extern angeordnete Strahlpumpe oder dergleichen erzeugt. Über das nun gasdicht verschlossene Probensammelgefäß (60) und die Saugleitungen (32) breitet sich ein Unterdruck im System aus. Dieser sinkt auf den Sollunterdruck ab, sobald die Endstücke (35) der Probensonden (30) in die Trauben (3) eintauchen bzw. den Traubenfüllstand (4) passieren. Während der gesamten Abwärtsfahrt wird kontinuierlich der Beerensaft (5) in das Probensammelgefäß (60) eingesaugt.

Der Beerensaft (5) entsteht bei der Probennahme u.a. dadurch, dass die Stirnflächen (36) der Endstücke (35) die Beeren, mit denen sie in Kontakt kommen, platzen lassen. Der dabei freiwerdende Saft (5) wird dann über die Saugschlitze (41) eingesaugt. Zusätzlich sorgen die Quetschstege (51) für eine ausreichende Saftproduktion, da sie weitere Beeren zumindest teilweise zerdrücken. Der Saft dieser Beeren sinkt schnell nach unten, um ebenfalls über die Schlitze (41) angesaugt zu werden.

Die Absenkgeschwindigkeit ist auf die Art der im Bottich (105) gelagerten Trauben (3) eingestellt. Bei sehr saftreichen Trauben (3) ist die Absenkgeschwindigkeit höher als bei saftarmen Trauben (3). Die Absenkgeschwindigkeit wird so eingestellt, dass am Hubende oder kurz vor dem Hubende im Probensammelgefäß (60) der Füllstandsschalter (92) anspricht und somit das Refraktometer (91) bzw. Analysegerät einschaltet. Im Probensammelgefäß (60) und in den Saugleitungen (32) befinden sich dann ca. 150 ml Beerensaft. Auf das Probensammelgefäß entfallen hierbei 60 ml.

Sollte bei einer Probennahme der Füllstandsschalter (92) bei dem Erreichen der tiefsten Probennahmestelle nicht angesprochen haben, wird am Wegmesssystem (103) die aktuelle Verfahrposition des Kolbens ausgelesen. Mit Hilfe dieses Wertes wird eine neue Absenkgeschwindigkeit für den Kolben berechnet und damit die Probennahme - nach einer Entleerung des teilbefüllten Probensammelgefäßes (60) - wiederholt. Die gleiche Prozedur wird eingeleitet, wenn der Füllstandsschalter (92) reagiert, bevor das letzte Drittel des Abwärtshubes erreicht ist. In diesem Fall wird die Absenkgeschwindigkeit um z.B. ein Drittel erhöht.

Selbstverständlich ist es auch möglich, das Absenken der Vorrichtung (1) stufenweise, z.B. in 20-cm-Abschnitten erfolgen zu lassen. Hier wird alle 20 cm die Absenkbewegung angehalten, um dann z.B. für 2 bis 10 Sekunden den Beerensaft anzusaugen. Bei dieser Vorgehensweise kann während der Absenkbewegung ggf. der Saugvorgang unterbrochen werden.

Nach der Messung wird die Probennahmevorrichtung (1) wieder nach oben aus dem Bottich (105) herausgezogen. Hierbei wird das Ablassventil (93) geöffnet, wodurch sich das Probensammelgefäß (60) und die Saugleitungen (32) schwerkraftbedingt entleeren. Die Entleerung wird ggf. unterstützt, indem am Luftanschluss (84) Druckluft angelegt wird. Dabei werden auch Beerenreste beseitigt, die sich gegebenenfalls im Bereich der Schlitze (41) der Endstücke (35) angesammelt haben.

Alternativ wird die Beerensaftprobe (5) als Rückstellprobe in ein entsprechendes Probengefäß abgefüllt.

Ist nach den Probennahmen mit einer längeren Stillstandsphase der Probennahmevorrichtung (1) zu rechnen, wird diese mit kaltem und/oder heißem Wasser gespült. Dazu wird der Luftanschluss (84) und das Ablassventil (93) geschlossen, um bevorzugt die Saugleitungen (32) und die Saugschlitze (41) zu durchspülen. Danach wird das Ablassventil (93) geöffnet, um das Probensammelgehäuse (60) zu spülen und die eingebauten Sensoren zu reinigen. Hierbei kann das Ablassventil (93) auch teilgeschlossen sein.

Es ist auch möglich, durch ein mehrfaches abwechselndes Öffnen und Schließen des Ablassventils (93) die Saugleitungen (32) und das Probensammelgefäß (60) für eine gute Reinigungswirkung stoßweise zu durchspülen.

Abschließend wird das Wasserventil (86) geschlossen. Über den Luftanschluss (84) wird Druckluft in das System geleitet, um die Saugleitungen (32), die Saugschlitze (41) und das Probensammelgefäß (60) trocken zu blasen. Ggf. wird auch hier mehrfach das Ablassventil (93) geschlossen, um die Saugrohre (32) verstärkt durchzublasen und zu trocknen.

Sämtliche Bleche und Rohre, die mit den Trauben (3) bzw. mit der Probe (5) in Berührung kommen, sind aus einem nichtrostenden Stahl, z.B. X5CrNi18-10, gefertigt.

### Bezugszeichenliste:

- 1: Probennahmevorrichtung
- 2: Vorrichtungsmittellinie
- 3: Trauben
- 4: Traubenfüllstand, Traubenfüllhöhe
- 5: Beerensaft, Beerensaftprobe, Probe, Inhalt Probenflüssigkeit, Medium
- 6: Flüssigkeitsstand in () bei Messende

- 10: Trägergehäuse
- 11: Gehäusegrundplatte
- 12: Ausnehmung
- 13: Unterseite von (11)
- 14: Tragring

- 15: Gehäusehaube
- 16: Ringflansch
- 17: Mantel
- 18: Deckel
- 21: Versteifungskreuz
- 22: Vierkantrohr, lang
- 23, 24: Vierkantrohre, kurz
- 25: Adapterplatte
- 26: Mutter
- 27: Montagewinkel
- 28: Gruppe von Bohrungen in (18)

- 30: Probensonde
- 31: Tragrohr
- 32: Saugleitungen, Saugrohre
- 33: Saugrohrabschnitte, radial und geneigt
- 34: Saugrohrabschnitte, vertikal
- 35: Endstück
- 36: Stirnfläche, sphärisch
- 37: Eindrehung
- 38: Einsenkung
- 39: Längsbohrung
- 41: Probenansaugausnehmung, Schlitz, Saugschlitz
- 42, 43: Sägescheiben, Scheibenfräser
- 44, 45: Sägescheibenmittellinien (Rotationsachsen)

- 47: Kreisscheibenhälfte
- 48: Seitenfläche, plan

- 51: Quetschstege, flügelartig
- 52: Stirnfläche
- 53: Planfläche, innen
- 54: Planfläche, außen
- 59: Mittellinie der Probensonde

- 60: Probensammelgefäß
- 61: Gefäßoberteil, oberer Bereich
- 62: Sammeltrichter
- 63: Deckel, Gefäßdeckel
- 64: Prallkörper
- 65: Stäbe

- 67: Gefäßunterteil, unterer Bereich
- 68: Abschnitt, quaderförmig
- 69: Abschnitt, halbzylindrisch
- 71: Messgeräteflansch für (91)
- 72: Schalterflansch für (92)
- 73: Ventilflansch für (93)
- 74: Mittellinie von (71)
- 75: Mittellinie von (72)
- 76: Mittellinie von (73)

- 81: Leitungs-T-Stück
- 82: T-Stückanschluss, unten, gefäßdeckelseitig
- 83: T-Stückanschluss, oben, ventilseitig
- 84: T-Stückanschluss, Mitte, Luftanschluss
- 85: Winkelstück

- 86: Ventil, Wasserventil; elektrisch betätigt
- 87: Ventilrohr
- 88: Wasseranschluss, Zulaufanschluss
- 89: Schließglied

- 91: Refraktometer, Analysegerät
- 92: Füllstandsschalter, kapazitiv
- 93: Ablassventil, Quetschventil, pneumatisch betätigt
- 94: Quetschschlauch, elastisch
- 95: Pneumatikanschluss, Druckluftanschluss

- 100: Hebevorrichtung
- 101: Pneumatikzylinder
- 102: Kolbenstange
- 103: Wegmesssystem für Kolbenhub
- 104: Hallendecke, Traggerüst

- 105: Behälter, Breisacher Bottich
- 106: oberer Behälterrand
- 108: Transportwagen, schienengeführt

## Patentansprüche

1. Probennahmevorrichtung für mit Trauben oder anderen versaftbaren Früchten befüllte Behälter,
**dadurch gekennzeichnet,**
- **dass** die Vorrichtung mindestens zwei Probensonden (30) mit jeweils mindestens einer Saugleitung (32) aufweist,
- **dass** die Saugleitungen (32) in ein mit Unterdruck beaufschlagbares Probensammelgefäß (60) münden,
- **dass** am Probensammelgefäß (60) ein Refraktometer (91) oder ein anderes Analysegerät angeschlossen ist, dessen Sensor mit dem Inhalt (5) des Probensammelgefäßes (60) in Kontakt kommt,
- **dass** oberhalb des Sensors des Refraktometers (91) oder eines anderen Analysegeräts am Probensammelgefäß (60) ein Füllstandsschalter (92) angeordnet ist, dessen Sensor oberhalb des Sensors des Refraktometers (91) oder des Analysegeräts liegt.

2. Probennahmevorrichtung gemäß Anspruch 1, **dadurch gekennzeichnet, dass** die Vorrichtung ein Trägergehäuse (10) aufweist, an dem und in dessen Inneren die unten aus dem Trägergehäuse (10) herausragenden Probensonden (30) formsteif gelagert sind.

3. Probennahmevorrichtung gemäß Anspruch 1, **dadurch gekennzeichnet, dass** die Vorrichtung acht parallel zueinander ausgerichtete Probensonden (30) hat.

4. Probennahmevorrichtung nach mindesten einem der vorangegangenen Ansprüche, **dadurch gekennzeichnet, dass** die am weitesten voneinander entfernt liegenden Probensonden (30) eine maximale Entfernung haben, die kleiner ist als 50% der - aus dem Trägergehäuse (10) herausragenden - Probensondenlänge, während die minimale Entfernung der am nahesten beieinanderliegenden Probensonden (30) größer ist als 15% der genannten Probensondenlänge.

5. Probennahmevorrichtung gemäß Anspruch 1, **dadurch gekennzeichnet, dass** am Probensammelgefäß (60) ein Druck- und Saugluftanschluss (84) angeordnet ist.

6. Probennahmevorrichtung gemäß Anspruch 1, **dadurch gekennzeichnet, dass** am Probensammelgefäß (60) ein Wasserzulauf (88) angeordnet ist, der mittels eines elektrisch betätigbaren Ventils (86) sperrbar ist.

7. Probennahmevorrichtung gemäß Anspruch 1, **dadurch gekennzeichnet, dass** im unteren Bereich des Probensammelgefäßes (60) ein pneumatisch oder elektrisch betätigbares Ablassventil (93) angeordnet ist.

8. Verfahren zur Probennahme aus einem mit Trauben (3) oder anderen versaftbaren Früchten befüllten Behälter (105) mit mindestens zwei die Probenflüssigkeit (5) ansaugenden Probensonden (30), **dadurch gekennzeichnet,**
- **dass** die Probensonden (30) mithilfe einer Vorrichtung (100) in den befüllten Behälter (105) eingeschoben werden,
- **dass** die Probensonden (30) während der Einschiebebewegung, die mindestens 80% der Behälterfüllhöhe (4) abdeckt, einen kleinen Teil der Trauben (3) oder der Früchte zur Freigabe ihres Saftes (5) deformieren und diesen Saft (5) als Probe über die Probensonden (30) mittels Unterdruck in ein Probensammelgefäß (60) fördern,
- **dass** mit einem im oder am Probensammelgefäß (60) angeordneten Analysegerät (91) während und/oder nach der Probennahme mindestens eine physikalische Größe und/oder mindestens ein Teil der chemischen Zusammensetzung erfasst und in elektrische Signale für eine nachgeschaltete Auswerteeinrichtung umgewandelt wird.

9. Verfahren zur Probennahme gemäß Anspruch 8, **dadurch gekennzeichnet, dass** nach der Probennahme die Probe (5) über ein Ablassventil (93) abgelassen wird.

10. Verfahren zur Probennahme gemäß Anspruch 8, **dadurch gekennzeichnet, dass** nach der Probennahme das Probensammelgefäß (60) und die Saugleitungen (32) zunächst mit Wasser gespült und dann mit Druckluft getrocknet werden.
